# FASCICULE DE BREVET EUROPEEN

(11) **EP 4 308 998 B1**
(45) Date de publication et mention de la délivrance du brevet: **24.12.2025**
(21) Numéro de dépôt: 22715079.4
(22) Date de dépôt: 16.03.2022
(51) Int. Cl.: G02C 7/04, G02C 7/10

(54) **LENTILLE HÉTÉROCHROME À CHANGEMENT DE COULEUR COMMANDÉ À DISTANCE**
HETEROCHROME LINSE MIT FERNGESTEUERTER FARBÄNDERUNG
HETEROCHROMIC LENS HAVING REMOTE-CONTROLLED COLOUR CHANGING

(30) Priorité: 19.03.2021 FR 2102785
(43) Date de publication de la demande: 24.01.2024
(73) Titulaire: Institut Mines Telecom, 91120 Palaiseau (FR)
(72) Inventeur: DE BOUGRENET DE LA TOCNAYE, Jean-Louis, 29820 GUILERS (FR); DUPONT, Laurent, 29280 PLOUZANE (FR); DANIEL, Emmanuel, 29480 LE RELECQ KERHUON (FR); NOURRIT, Vincent, 29200 BREST (FR); PERSON, Christian, 29810 LAMPAUL PLOUARZEL (FR)
(74) Mandataire: Ipsilon
(86) Numéro de dépôt international: PCT/EP2022/056802
(87) Numéro de publication internationale: WO 2022/194922

(56) Documents cités:
- EP-A1- 2 761 364
- WO-A1-2014/189894
- WO-A2-2008/103906
- US-A1- 2016 299 357
- US-B2- 8 542 325

## Description

### Domaine technique

La présente invention concerne les lentilles de contact comportant ou non une correction réfractive, et plus particulièrement une lentille hétérochrome à changement de couleur commandé à distance.

### Technique antérieure

Certaines personnes souhaitent pouvoir changer la couleur de leurs yeux, qu'il y ait ou non un besoin de correction optique.

Pour ce faire, il existe des lentilles de contact colorées, de couleur prédéfinie.

L'inconvénient de ces lentilles est qu'il n'est pas possible de changer de couleur autrement qu'en changeant les lentilles.

Le concept de lentilles « connectées » dont on pourrait commander la couleur à distance en utilisant par exemple un téléphone portable est relativement ancien, mais à ce jour il n'existe aucune version commerciale, en raison des difficultés à réaliser une telle lentille.

En effet, la conception d'une telle lentille suppose à la fois de pouvoir la produire à coût compatible avec une commercialisation à une large échelle, et de pouvoir miniaturiser les composants suffisamment pour permettre leur encapsulation dans la lentille.

Le brevet US8542325B2 décrit des lentilles de contact à changement de couleur en réponse à divers stimuli tels que l'évolution de la température corporelle. Le changement de couleur repose sur l'utilisation de cristaux liquides.

La demande KR 20200020021116U décrit également une solution reposant sur l'utilisation de composants thermochromiques, permettant de modifier la couleur en fonction des changements de température ambiante.

Dans le cas de l'utilisation de composés thermochromiques, le changement de couleur n'est pas facilement contrôlable par l'utilisateur.

Par ailleurs, des lentilles de contact ont été conceptualisées sur la base du changement de couleur de colorants photochromiques lors de l'exposition aux rayons UV du soleil. Ces colorants permettent d'obtenir des conseils personnalisés en matière de protection contre les UV. La lentille de contact peut changer de couleur lorsqu'elle est exposée à la lumière du soleil et aider ainsi l'utilisateur à percevoir le changement de couleur dans son champ de vision.

Le brevet US10678068B2 décrit une lentille de contact comportant un filtre obturateur de protection de la rétine, placé devant la pupille, normalement neutre mais possiblement coloré, et dont le facteur de transmission est variable et commandé électroniquement. Le filtre obturateur est commandé en permanence avec une gradation continue et le circuit électronique comporte un micro-processeur, un ou plusieurs capteurs d'éblouissement tels qu'une cellule photovoltaïque et une micro-batterie. La complexité du circuit électronique rend son intégration dans une lentille difficile et coûteuse. De plus, l'autonomie reste relativement limitée, du fait de la nécessité d'une alimentation électrique permanente du micro-processeur.

Le document US 2016/299357 A1 divulgue une lentille de contact comportant un élément électro-optique.

### Exposé de l'invention

Il existe par conséquent un besoin pour bénéficier d'une lentille de contact permettant un changement de couleur facilement contrôlable par l'utilisateur, convenant à une production à large échelle pour un usage purement cosmétique, ou pour d'autres types d'usages, si cela est souhaité.

### Résumé de l'invention

L'invention vise à répondre à ce besoin, et elle y parvient, selon l'un premier de ses aspects, en proposant une lentille de contact, notamment de type scléral, telle que définie dans la revendication 1.

Par lentille de type « scléral », on entend ici et dans le cadre de l'invention le sens usuel, à savoir une lentille de contact de diamètre relativement grand qui en configuration portée par l'œil passe en pont au-dessus de la cornée sans la toucher, en prenant appui sur la sclère de l'œil.

La lentille selon l'invention, notamment lorsque sclérale, peut être rigide ou hybride (semi-rigide).

La zone centrale laisse un accès optique à la pupille, sans que la lumière gagnant celle-ci ne soit interceptée par le matériau électro-optique absorbant, au moins pour un diamètre moyen de la pupille. De préférence, cette zone centrale présente un diamètre de 5mm, la taille de la pupille variant généralement de 2 à 8mm de diamètre.

### Structure électro-optique

De préférence, la structure électro-optique comporte au moins deux électrodes disposées de part et d'autre de la couche de matériau électro-optique, notamment deux électrodes transparentes ou semi-transparentes disposées de préférence respectivement au-dessus et en-dessous de la couche de matériau électro-optique.

Dans certains exemples de réalisation, la structure électro-optique comporte au moins une première couche d'un premier matériau électro-optique bistable et une deuxième couche d'un deuxième matériau électro-optique bistable différent du premier, ce qui permet d'obtenir plus de possibilités de teintes pour la lentille, par combinaison des couleurs des deux couches. Dans ce cas, les deux couches peuvent être commandées simultanément, ou en variante si le circuit électronique est agencé pour, sélectivement indépendamment l'une de l'autre.

Chaque couche de matériau électro-optique bistable est de préférence disposée entre deux électrodes, notamment deux électrodes transparentes, disposés respectivement au-dessus et en-dessous de cette couche. Un matériau isolant électrique peut être présent entre les différentes couches de manière à éviter les courts-circuits entre les électrodes au contact de ces couches.

Les électrodes peuvent être pleines ou comporter des ajours, notamment au niveau de la zone centrale de la lentille.

### Couche réfléchissante ou semi-réfléchissante

Selon l'invention, la réflexion de la lumière sur la couche réfléchissante ou semi-réfléchissante précitée est de type diffuse, et non pas spéculaire.

Cette couche réfléchissante ou semi-réfléchissante peut être colorée ou non, et sa couleur peut être choisie en fonction des teintes que l'on souhaite donner à la structure électro-optique selon les états pris par le ou les matériaux électro-optique absorbants.

Les propriétés colorimétriques de la couche réfléchissante ou semi-réfléchissante peuvent être choisies par rapport à celles de la ou les couches de matériau électro-optique de telle sorte que la lentille de contact puisse prendre au moins deux teintes apparentes distinctes.

La structure électro-optique peut comporter une couche de matériau électro-optique qui prend par exemple un état dans lequel sa couleur est X, et la couche réfléchissante ou semi-réfléchissante est de couleur Y, le couple (X,Y) étant choisi par exemple parmi (Jaune, Cyan), (Cyan, Jaune), (Magenta, Cyan) ou (Jaune, Mauve), entre autres possibilités, de telle sorte que la lentille apparaisse dans ces conditions d'une teinte sensiblement verte, bleue ou marron, respectivement. En variante, les propriétés colorimétriques de la couche réfléchissante ou semi-réfléchissante sont sensiblement complémentaires de celles d'au moins une couche de matériau électro-optique dans l'un de ses états, de telle sorte que la teinte apparente de la lentille de contact soit alors sensiblement noire.

### Matériau électro-optique

Par « état stable » et matériau « bistable », on entend un matériau électro-optique absorbant qui conserve ses propriétés colorimétriques lorsque le champ électrique qui l'a amené dans cet état cesse. Ces propriétés peuvent évoluer, le cas échéant, mais à une vitesse suffisamment lente pour que l'utilisateur ait le temps de profiter de la couleur obtenue pendant trois heures au moins, mieux pendant douze heures au moins, encore mieux pendant 24h au moins.

De préférence, le matériau électro-optique est de type électro-chromique bistable, électrophorétique, électro-plasmonique ou cristal liquide bistable, notamment cristal liquide avec des dopants dichroïques colorés.

Un matériau électro-optique comporte par exemple des oxydes de métaux et métaux de transition, des composés hexacyanométallate, notamment le bleu de Prusse, ou encore des colorants ou polymères conducteurs, des viologènes, des fullerènes ou des metallopolymères, notamment sous forme de gel.

Le matériau électro-optique est de préférence de type électro-chromique bistable, ce qui présente l'avantage de permettre facilement l'obtention d'une grande variété de teintes, grâce à l'existence de nombreux matériaux disponibles sur le marché, et d'avoir en outre une faible tension de commande, de l'ordre de 1V.

Le changement de couleur peut être le résultat d'une réaction d'oxydo-réduction au sein du matériau. L'absorption de la lumière par le matériau électro-optique dépendant de son état oxydé ou réduit, on peut ainsi contrôler ses propriétés d'absorption colorimétriques grâce à l'application d'un champ électrique.

Le changement de teinte du matériau électro-optique absorbant peut être plus ou moins rapide, selon sa nature et la tension appliquée.

Lorsque le changement de teinte est relativement lent, la lenteur du changement de teinte peut être mise à profit pour contrôler la couleur finale obtenue, en arrêtant la transformation lorsque la teinte ou l'aspect souhaité est atteint.

Comme mentionné plus haut, on peut combiner au sein de la structure électro-optique plusieurs composés capables de changer de couleur en fonction du champ appliqué. Ces composés sont par exemple présents au sein de couches respectives différentes. Par exemple, la structure électro-optique comporte deux composés électro-chromes superposés présents au sein de couches distinctes, pouvant prendre par exemple des couleurs complémentaires et montés en inversion de telle sorte que quand l'un est actif (donc coloré) l'autre ne l'est pas (donc incolore), et inversement. Dans ce cas, il est possible d'éviter l'emploi d'une couche de fond réfléchissante ou semi-réfléchissante de couleur complémentaire.

Ces composés peuvent encore être mélangés au sein d'une même couche. Par exemple, au moins une couche de matériau électro-optique absorbant comporte un mélange d'au moins deux composés changeant de couleur sous l'effet de l'application d'une tension. La couche contient par exemple un mélange d'au moins deux composés électro-chromes différents, notamment prenant des couleurs différentes (par exemple cyan et magenta) lorsque soumis à un champ électrique.

Par exemple, la couche de matériau électro-optique absorbant comporte un mélange d'au moins deux composés électro-chromes différents, le mélange étant agencé pour présenter une distribution de couleur non homogène lorsque soumis à un champ électrique, notamment une distribution créant un motif se rapprochant sensiblement d'un iris naturel.

On peut notamment choisir des composés ayant des seuils de tension et/ou des cinétiques de transformation différents, de telle sorte que l'on peut contrôler la couleur résultante en choisissant l'amplitude de la tension appliquée et/ou la durée d'application de la tension. Par exemple, dans le cas d'un mélange de composés électro-chromes, la sélection de la couleur peut s'effectuer en modulant la tension appliquée. Par exemple, l'application d'une tension V1 active une couleur, par exemple le rouge, et l'application d'une tension supérieure V1+ΔV active une autre couleur, par exemple le bleu, en plus de la première. Dans ce cas, l'activation du composé de tension d'activation la plus grande entraîne nécessairement l'activation du composé de moindre tension d'activation, ce qui peut ne pas être le cas lors de l'utilisation de deux couches distinctes contenant chacune un composé électro-chrome.

Un composé électro-chrome neutre (c'est-à-dire de couleur noire ou transparent) disposé devant un fond coloré (par exemple vert ou bleu) peut également être utilisé, et produire un changement de couleur de la lentille, notamment de la luminance, lors de son changement d'état. On peut alors jouer sur la durée d'application du champ électrique et sur la cinétique de transformation pour moduler de façon graduelle la luminance de la couleur de la lentille. Par exemple, une durée d'application élevée du champ entraîne un fort noircissement du composé, et donc une forte diminution de la luminance ; a contrario, une plus faible durée d'activation entraîne un moindre noircissement. et donc une plus faible diminution de la luminance.

On peut encore utiliser une encre ou un mélange d'encres électrophorétiques en tant que matériau électro-optique bistable. Des exemples d'encres électrophorétiques sont décrits dans l'article A Full Color Electrophoretic Display, S.J. Telfer et al, 42-4/S.J. Telfer Invited Paper SID 2016 DIGEST.

### Dispositif d'activation

On peut utiliser pour provoquer le changement de couleur de la lentille divers dispositifs d'activation.

De préférence, le dispositif d'activation est radiofréquence, ce qui permet d'émettre un champ radiofréquence qui peut être converti en énergie électrique, par exemple par couplage inductif, au sein de la lentille pour alimenter le circuit électronique de celle-ci.

La commande peut être obtenue dans un exemple par simple conversion d'énergie du champ d'activation en tension, à partir d'un champ électromagnétique d'activation. Dans ce cas, le signal de commande est réduit au champ électromagnétique d'activation.

Le champ radiofréquence émis par le dispositif d'activation peut encore permettre de commander le changement de couleur, soit parce que le circuit électronique est configuré pour provoquer un changement de couleur à chaque nouvelle activation par le champ radiofréquence, soit parce que le champ radiofréquence porte un signal de commande qui est décodé par le circuit électronique de la lentille pour produire le changement de couleur correspondant.

Le dispositif d'activation peut encore émettre un signal optique, par exemple IR, qui est décodé par le circuit électronique de la lentille. Cela suppose dans ce cas la présence dans la lentille d'une source électrique d'alimentation autonome.

Le dispositif d'activation peut être un dispositif spécifique, qui est par exemple proposé à l'utilisateur en même temps que les lentilles, par exemple au sein d'un même conditionnement. En variante, le dispositif d'activation est un dispositif ayant d'autres utilisations par ailleurs, par exemple un téléphone portable.

Le dispositif d'activation peut comporter un interrupteur de marche/arrêt dans sa version la plus simple, où chaque nouvelle activation du circuit électronique de la lentille s'accompagne d'un changement de couleur. En variante, le dispositif d'activation comporte un sélecteur permettant de choisir au moins une teinte résultante.

La sélection de teinte peut être binaire ou plus complexe, et le dispositif d'activation peut notamment jouer sur la durée d'activation pour modifier graduellement la teinte, comme expliqué plus haut.

En variante, le dispositif d'application émet un signal qui code par exemple la luminance et/ou la teinte, et le circuit électronique de la lentille décode ce signal pour le traduire en niveaux de tension et/ou durées d'application de la tension au sein de la structure électro-optique. Le dispositif d'application peut encore traduire un niveau de luminance et/ou une teinte sélectionnés par l'utilisateur directement en une durée et/ou une intensité d'activation de la lentille, le circuit électronique de celle-ci étant alors totalement passif.

L'activation de la lentille peut s'effectuer avant sa pose, ou en variante in situ après celle-ci. Lorsque l'activation s'effectue avant la pose de la lentille, le dispositif d'activation peut comporter un support permettant de positionner d'une manière prédéfinie la lentille pour l'activation, ou un conditionnement stérile contenant la lentille. Lorsque l'activation s'effectue par radiofréquence, un tel support permet de contrôler avec plus de précision l'intensité du champ induit dans la lentille, en permettant de positionner la lentille avec une orientation et à un éloignement prédéfinis de la bobine du dispositif d'activation, ce qui est intéressant lorsque l'intensité de l'activation contrôle directement l'amplitude du champ appliqué au matériau optique bistable.

Le dispositif d'activation peut être réutilisable, et les lentilles à usage unique.

### Circuit électronique

Le circuit électronique est de préférence agencé pour recevoir un signal de commande RF ou optique de préférence IR, de préférence RF.

Le circuit électronique comporte par exemple au moins une antenne ou un autre type de capteur, par exemple optique, permettant de recevoir l'énergie nécessaire à son fonctionnement, de préférence au moins une antenne comportant une ou plusieurs spires s'étendant autour de ladite zone centrale.

Le circuit électronique est de préférence agencé de telle sorte que l'énergie nécessaire au fonctionnement du circuit électronique soit apportée par le signal de commande.

Dans un mode de réalisation, le circuit électronique comporte deux circuits de réception accordés sur des fréquences respectives différentes et/ou sensibles à des polarisations respectives différentes du signal de commande, de préférence deux circuits de réception accordés à des fréquences respectives différentes, ces circuits de réception permettant d'appliquer des champs électriques respectifs de polarités opposées et/ou d'amplitudes différentes à au moins une couche de matériau électro-optique, la lentille étant alors de préférence dépourvue d'accumulateur électrique.

De préférence, chaque circuit de réception comporte une antenne propre, de préférence une antenne comportant au moins une spire, et un redresseur respectif par lequel le circuit de réception est relié à la structure électro-optique. Dans ce cas, la commande peut s'effectuer par simple conversion du champ reçu en une tension appliquée à la structure électro-optique.

En variante, le circuit électronique est agencé pour générer de façon séquentielle, à chaque fois qu'il reçoit le signal de commande, une tension d'alimentation de la structure électro-optique dont la polarité est opposée à celle précédemment générée, la lentille comportant de préférence un micro-accumulateur électrique pour permettre la mémorisation de la polarité d'alimentation de la structure électro-optique en l'absence de réception du signal de commande. La consommation électrique peut être très faible, ce qui est avantageux pour obtenir l'autonomie recherchée.

Comme mentionné plus haut, on peut jouer sur la durée d'application du champ et/ou sur l'amplitude de la tension appliquée pour contrôler la couleur.

Par exemple, le circuit électronique être agencé pour décoder un signal de commande de manière à le traduire en une durée d'application correspondante du champ électrique au matériau électro-optique, lorsque la couleur obtenue est fonction de cette durée d'application. On peut ainsi contrôler la luminance de la couleur de la lentille, par exemple.

Dans un autre exemple, en cas d'utilisation d'un mélange de composés électro-chromes, le signal de commande est décodé pour le traduire en une amplitude d'application de la tension à ce mélange.

L'invention a encore pour objet un ensemble comportant d'une part une lentille selon l'invention et d'autre part un dispositif d'activation permettant de générer le signal de commande de changement d'état, notamment un dispositif d'activation comportant un émetteur bi-fréquence accordé sur les deux fréquences des antennes du circuit électronique précité.

L'invention a encore pour objet un procédé pour provoquer le changement de couleur d'une lentille de contact selon l'invention, ou appartenant à un ensemble tel que défini plus haut, le procédé comportant l'étape consistant à :
- Emettre un signal de commande à l'aide d'un dispositif d'activation, la réception de ce signal de commande par le circuit électronique de la lentille provoquant l'application au matériau électro-optique d'un champ électrique d'une polarité, d'une amplitude et/ou d'une durée prédéfinie(s), conduisant le matériau optique à changer d'état, le matériau conservant cet état lorsque le champ électrique cesse d'être appliqué.

### Brève description des dessins

L'invention pourra être mieux comprise à la lecture de la description détaillée qui va suivre, d'un exemple de mise en œuvre non limitatif de celle-ci, et à l'examen du dessin annexé, sur lequel :
[Fig 1] la figure 1 représente en coupe de manière schématique et partielle un exemple de lentille selon l'invention,
[Fig 2] la figure 2 représente un exemple de circuit électronique de la lentille,
[Fig 3] la figure 3 représente un exemple de circuit imprimé du circuit électronique,
[Fig 4] la figure 4 représente une variante de circuit électronique de la lentille,
[Fig 5] la figure 5 illustre l'action de différentes couches de la structure optique sur la couleur de la lumière réfléchie,
[Fig 6] la figure 6 représente de manière schématique et partielle une variante de réalisation de la structure optique à deux couches de matériau absorbant électro-optique.

### Description détaillée

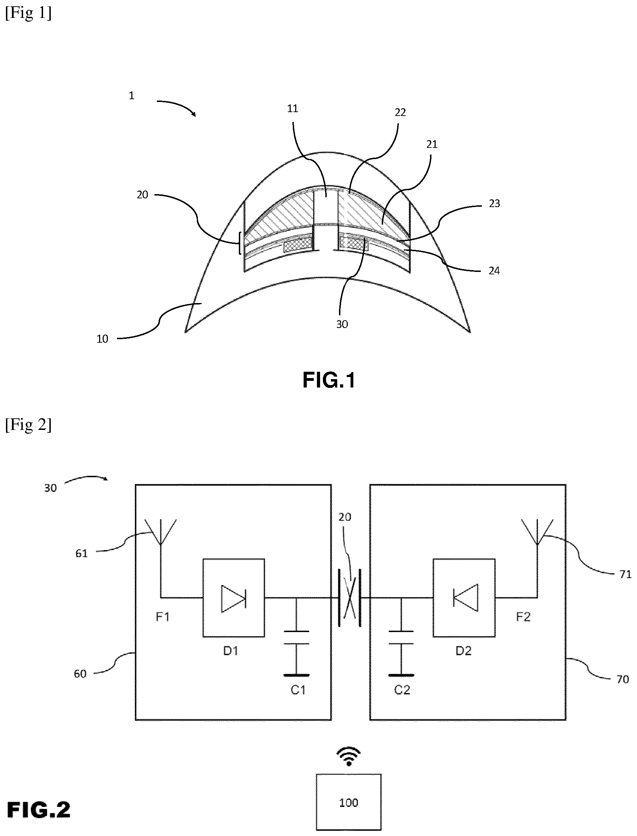

On a représenté de façon schématique à la figure 1 un exemple de lentille de contact 1 selon l'invention, comportant un corps 10 encapsulant une structure électro-optique 20 et un circuit électronique 30 de commande de la structure électro-optique 20.

La lentille 1 est par exemple de type scléral, et peut comporter une correction réfractive ou non. La lentille peut être à usage unique ou jetable après un certain nombre d'utilisations.

La structure électro-optique 20 est destinée à recouvrir l'iris de l'œil sur lequel elle est posée, pour en modifier la couleur apparente, dans un but esthétique. Le changement de couleur de la structure électro-optique 20 résulte du changement d'état d'au moins une couche 21 d'un matériau électro-optique absorbant de celle-ci.

De préférence, la structure optique 20 présente une forme annulaire, et ne recouvre pas une zone centrale 11, s'étendant tout autour de celle-ci. Le changement de couleur de la structure électro-optique 20 n'affecte pas la zone centrale 11 de la lentille, laissant ainsi la pupille dégagée, au moins lorsque celle-ci n'est pas exagérément dilatée.

Sur la figure 1, on a représenté la structure optique 20 avec une variation d'épaisseur, mais elle peut présenter aussi une épaisseur sensiblement constante, afin notamment de ne pas générer de variation de luminance due à une variation d'épaisseur du matériau électro-optique.

La structure électro-optique 20 peut comporter deux électrodes 22 et 23 entre lesquelles la couche 21 de matériau électro-optique est disposée. Ces électrodes 22 et 23 sont de préférence transparentes, et peuvent couvrir chacune entièrement la couche 21.

Ces électrodes peuvent être réalisées avec des profils variés. Elles peuvent être pleines ou présenter des ajours, notamment au niveau de la zone centrale 11 de la lentille. Elles peuvent traverser la zone centrale 11, comme représenté à la figure 1, ou non.

Les électrodes 22 et 23 sont par exemple réalisées dans un polymère électro-conducteur tel qu'un oxyde mixte d'indium et d'étain (ITO) ou encore le poly(3,4-éthylènedioxythiophène) (PEDOT).

La structure électro-optique 20 comporte également, dans l'exemple considéré, une couche de fond 24 dont les propriétés optiques sont choisies en fonction de celles de la couche 21 et des couleurs que l'on cherche à générer, comme cela est détaillé plus loin.

Le circuit électronique 30 est disposé derrière la couche de fond 24, de manière à être masqué par celle-ci et non apparent.

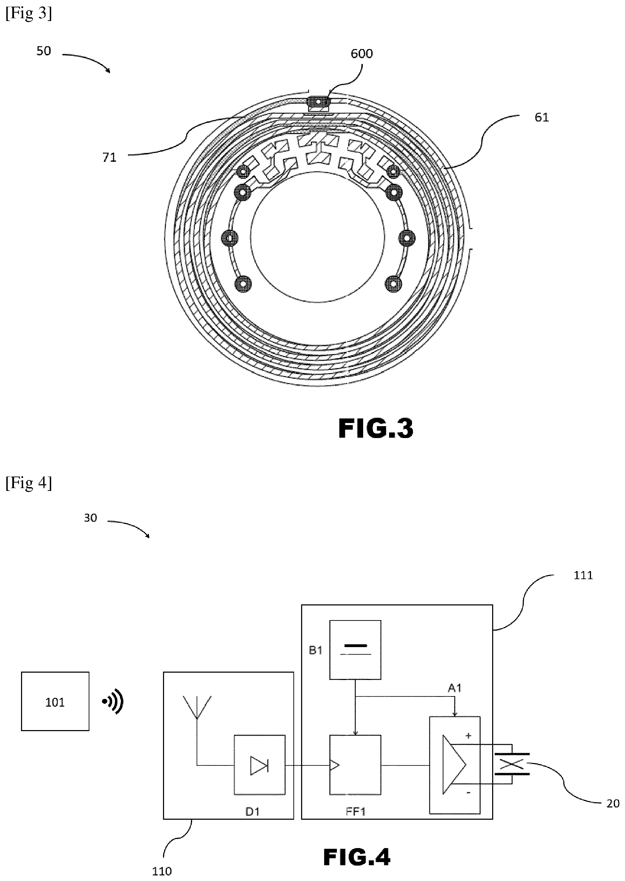

Ses composants s'étendent autour de la zone centrale 11 de manière à ne pas bloquer la lumière gagnant la pupille. Le circuit électronique peut s'étendre sur toute la surface disponible de l'iris, comme représenté à la figure 3.

Le circuit électronique 30 peut être réalisé de diverses façons, mais préférentiellement avec au moins un circuit de réception RF-40 à antenne magnétique comportant une ou plusieurs spires réalisées par exemple sur un circuit imprimé 50 tel que celui illustré à la figure 3.

Dans un exemple de réalisation illustré à la figure 2, le circuit 30 comporte deux circuits de réception 60, 70, accordés chacun sur une fréquence respective F1 ou F2.

Ces circuits 60, 70 comportent par exemple des antennes magnétiques 61, 71 dont les spires sont réalisées sur des faces respectives opposées du circuit imprimé 50, comme illustré sur la figure 3.

Sur la figure 3 on a représenté uniquement les pistes imprimées correspondant aux antennes 61 et 71. Les antennes 61 et 71 sont par exemple chacune reliée à une capacité d'accord (non représentée), et branchées à une masse commune 600.

Les circuits de réception 60 ou 70 comportent des redresseurs respectifs constitués par exemple par des diodes D1, D2, et des capacités de filtrage C1 et C2, branchées par exemple entre la cathode de la diode et la masse, l'anode de chaque diode étant reliée à son antenne respective.

Ainsi, les polarités qui sont appliquées aux électrodes 22 et 23 sont opposées selon le circuit de réception qui est activé.

On peut utiliser pour commander la lentille 1 un dispositif de commande 100 capable d'émettre au choix à l'une des fréquences F1 et F2, et représenté schématiquement à la figure 2. Ce dispositif de commande 100 comporte par exemple deux circuits d'émission à antenne magnétique accordés respectivement sur les fréquences F1 et F2, et au moins un bouton de commande permettant de sélectionner le circuit d'émission et de déclencher l'émission. On utilise par exemple des fréquences porteuses de l'ordre de 12,5 MHz pour F1, et de 6,25 MHz pour F2, correspondant à un sous-multiple de F1. Ainsi, lorsque l'utilisateur sélectionne la fréquence F1 et déclenche l'émission, il peut en approchant suffisamment le dispositif de la lentille activer le circuit de réception 60, de sorte que ce dernier applique une tension positive entre les électrodes 22 et 23. Le circuit de réception 70 ne délivre à ce moment pratiquement aucune tension, les fréquences F1 et F2 étant suffisamment distantes.

L'application à la couche 21 de matériau électro-optique du champ électrique lié à la polarité des électrodes 22 et 23 amène celui-ci à prendre un état prédéfini.

Une fois que l'émission du champ d'activation du circuit de réception 60 cesse, le matériau électro-optique conserve son état du fait de sa bistabilité.

Pour changer cet état, l'utilisateur active le circuit de réception 70 en émettant à la fréquence F2. Dans ce cas, la polarité appliquée aux électrodes 22 et 23 devient négative, le circuit de réception 60 ne délivrant pratiquement aucun signal du fait de la distance entre les fréquences F1 et F2.

L'application d'un champ de polarité opposée au matériau électro-optique amène celui-ci à changer d'état. Une fois que l'émission cesse, le matériau conserve son état du fait de sa bistabilité.

Dans l'un des états le matériau électro-optique est par exemple sensiblement incolore et transparent, et dans l'autre état coloré.

Cet exemple de réalisation présente l'avantage de permettre une commande extrêmement simple de l'état du matériau électro-optique, avec un nombre réduit de composants, ce qui rend la lentille compatible avec une fabrication à large échelle à un coût relativement faible.

Le dispositif de commande 100 est par exemple intégré dans un porte-clé qui peut être approché de la lentille par l'utilisateur.

Bien entendu, le circuit électronique 30 peut être réalisé autrement sans sortir du cadre de la présente invention, et par exemple avec une fonction de mémorisation de la polarité appliquée au matériau électro-optique et/ou en permettant l'application de plusieurs niveaux de tension pour l'une au moins des polarités.

Le circuit électronique 30 peut comporter une micro-batterie B1, comme illustré à la figure 4, permettant d'utiliser un ou plusieurs circuits logiques et/ou microprocesseur ou autre circuit spécialisé.

La micro-batterie peut être un accumulateur déformable, encapsulé dans la lentille. Il peut notamment s'agit d'un accumulateur tel que décrit dans la demande WO 2018/167393 A1. Un tel accumulateur a pour avantage d'être de dimensions très réduites, typiquement d'une surface de l'ordre de 0,75cm². Cette batterie souple a également pour caractéristiques avantageuses d'être étirable et autoréparable de façon à être intégrée au mieux dans la lentille de contact.

Dans l'exemple de la figure 4, le circuit électronique 30 ne comporte qu'un seul circuit de réception 110, accordé sur une fréquence FF1, et dont le signal est par exemple redressé à l'aide d'une diode D1. La fréquence utilisée est par exemple de l'ordre de celle des hautes fréquences utilisées pour les systèmes RFID, par exemple de 12,5 MHz.

Un circuit de commande 111 est prévu pour d'une part assurer la charge de la micro-batterie B1 lorsque le circuit de réception est activé, et d'autre part transformer l'activation du circuit de réception en un signal de commande de la polarité appliquée au matériau électro-optique.

Par exemple, le circuit de commande 111 est réalisé de telle sorte que toute nouvelle activation de celui-ci provoque un changement d'état de la polarité appliquée, par rapport à celle précédemment appliquée.

Lorsque l'activation du circuit de réception 110 cesse, le circuit de commande 111 cesse d'appliquer un champ électrique au matériau électro-optique, et celui-ci conserve l'état dans lequel il est laissé.

Néanmoins, la micro-batterie B1 permet au circuit de commande 111 de conserver en mémoire l'état de la polarité appliquée. Ainsi, lors d'une nouvelle activation du circuit de réception, le circuit de commande 111 peut déterminer la nouvelle polarité à appliquer, connaissant l'ancienne.

Le circuit de commande 111 peut être réalisé simplement avec une bascule logique, dont l'état est conservé du fait du maintien de l'alimentation par la micro-batterie B1.

Comme représenté à la figure 4, on peut utiliser pour activer le circuit de réception 110 un dispositif d'activation 101 comportant un émetteur accordé sur la fréquence FF1 de l'antenne du circuit électronique 30. Ce dispositif est par exemple réalisé spécifiquement.

En cas d'utilisation d'un circuit électronique 30 plus complexe, capable de décoder une information transmise, on peut utiliser un dispositif d'activation ayant une autre utilité, tel qu'un smartphone ou une montre connectée.

On peut générer des couleurs différentes pour la lentille 1 de plusieurs manières.

La structure électro-optique comporte une couche de fond 24, comme dans l'exemple illustré à la figure 1. On choisit avantageusement les propriétés optiques de cette couche 24 en fonction des couleurs que l'on souhaite générer, et des propriétés d'absorption colorimétriques de la couche 21 de matériau électro-optique placée devant.

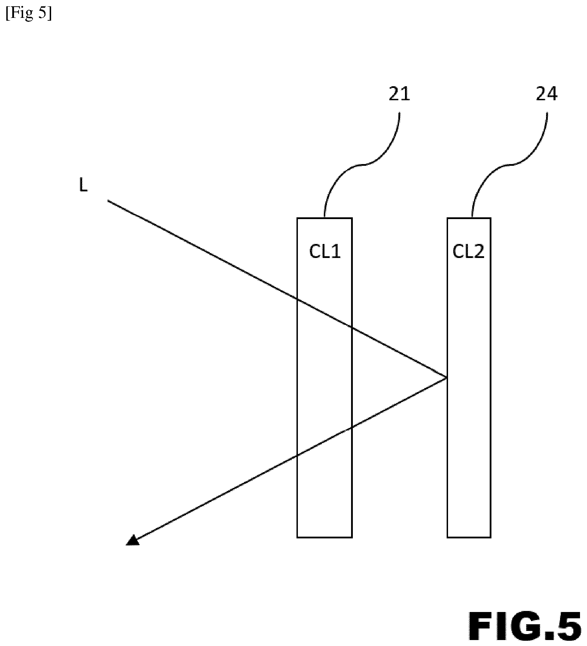

La couche de fond 24 étant réfléchissante ou semi-réfléchissante à réflexion diffuse, elle peut réfléchir au moins partiellement la lumière L qui n'a pas été absorbée par la couche 21, comme illustré à la figure 5.

On peut alors choisir la couleur de la couche 24 de manière à réfléchir uniquement la lumière de couleur souhaitée.

On choisit par exemple comme couleur de couche 24 une couleur CL2 cyan, de façon à absorber la lumière incidente rouge. Ainsi, si le matériau électro-optique 21 prend un état de couleur CL1 rouge, on obtiendra par synthèse soustractive une lentille de couleur C3 noire, car les deux couches 21 et 24 ayant des propriétés colorimétriques complémentaires, sensiblement toute la lumière incidente aura été absorbée par la structure électro-optique.

Similairement, si la couche 21 prend un état de couleur CL1 jaune ou un état de couleur CL1 magenta, on obtiendra une lentille de couleur sensiblement verte ou de couleur sensiblement bleue, respectivement.

Toute combinaison de couleurs (CL1, CL2) entre les couches 21 et 24 est possible, afin de générer des teintes CL3 naturelles, ou non, selon ce qui est souhaité. Certaines de ces combinaisons, parmi d'autres, sont listées dans le tableau 1 ci-dessous, à titre non limitatif.

Dans le tableau 1 ci-dessous, CL1 est la couleur de la couche 21 de matériau électro-optique, CL2 est la couleur de la couche de fond 24, CL3 est la couleur résultante apparente obtenue pour la lentille 1. On considère ici que la lumière L incidente est de couleur blanche.

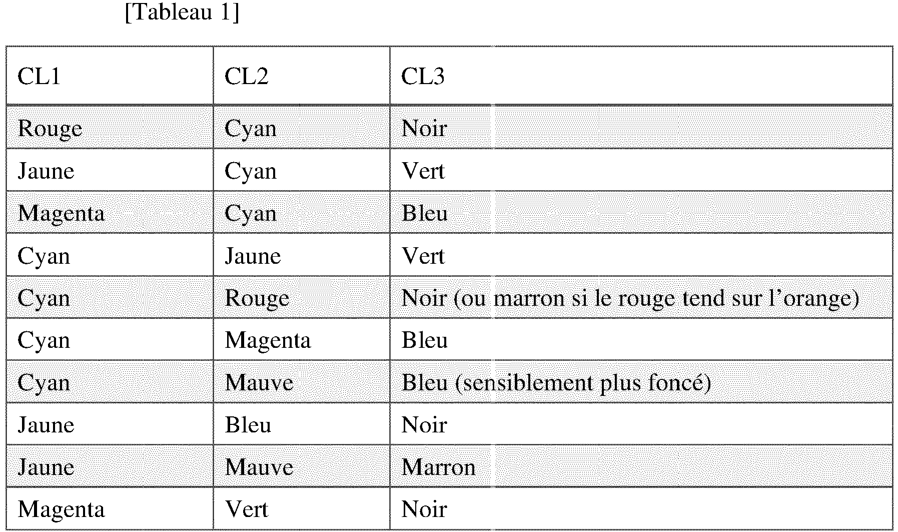

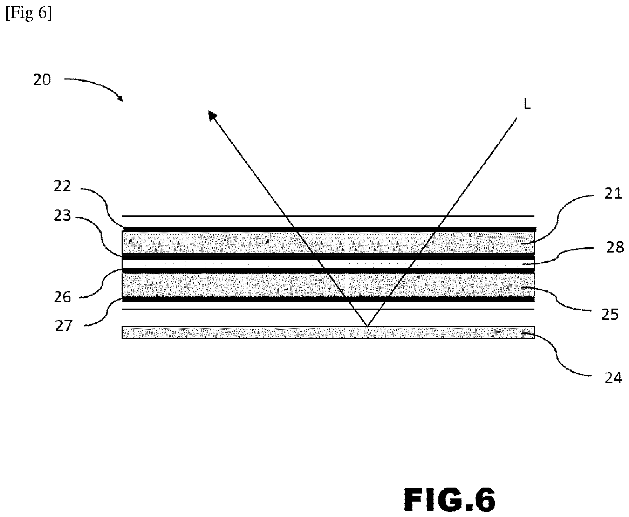

Dans une variante, la structure électro-optique comporte une seconde couche 25 de matériau électro-optique, notamment de type électro-chrome, disposée derrière la première couche 21 de matériau électro-optique et devant une couche de fond 24, comme illustré à la figure 6.

Des électrodes 26 et 27 peuvent être disposées de part et d'autre de la seconde couche 25, dont l'état peut alors être changé indépendamment de celui de la première couche 21, par application d'un champ électrique entre les électrodes 26 et 27.

Un matériau isolant 28 est présent entre les deux couches de matériau électro-optique 21 et 25.

Selon leur état, les couches absorbantes 21 et 25 absorbent la lumière d'une certaine couleur. On choisit leurs propriétés colorimétriques de manière à pouvoir obtenir plusieurs couleurs résultantes possibles pour la lentille 1, par exemple correspondant à des teintes d'iris réalistes.

Dans cette variante, la couche de fond 24 peut être teintée ou non, selon les combinaisons de couleur que l'on souhaite réaliser.

On peut aussi jouer sur la cinétique des réactions d'oxydo-réduction conduisant aux changements de couleur dans la ou les couches de matériau électro-optique absorbant pour élargir le panel de couleurs apparentes que l'on peut obtenir pour la lentille 1.

On peut utiliser alors le dispositif d'activation 101 pour contrôler la durée d'application du champ électrique, ce qui permet de faire varier la densité d'absorbants dans la ou les couches de matériau électro-chrome concernées, et d'en ajuster la couleur ou l'absorption.

Dans d'autres exemples de réalisation, au moins une couche de matériau électro-optique comporte plusieurs composés électro-chrome mélangés. Ainsi, en modulant la tension appliquée à cette couche, on peut sélectionner, par addition de couleurs activées, différentes couleurs au sein d'une même couche. Une tension appliquée V permet par exemple de faire passer la couche dans un état absorbant la couleur bleue, et en augmentant la tension appliquée à V+ΔV, on active un état absorbant à la fois les couleurs bleue et rouge.

Le mélange de composés électro-chromes et/ou les différentes couches peuvent notamment permettre de créer une distribution de couleur non homogène lorsque soumis à un certain niveau de tension, par exemple une distribution formant un motif qui reproduirait les variations de couleur d'un iris naturel.

On peut obtenir les différents niveaux de tension de plusieurs manières.

On peut par exemple approcher plus ou moins le dispositif de commande de la lentille 1 pour faire varier le niveau de tension induite au sein de la lentille et donc l'amplitude du champ électrique appliqué.

Dans une variante, le circuit électronique 30 comporte plusieurs circuits de réception pouvant chacun appliquer un niveau de tension, ce qui est utile notamment lorsque le matériau électro-optique comporte un mélange de composés électro-chromes ayant des tensions d'activation différentes. Ces circuits sont par exemples accordés à des fréquences respectives F1, F2. Le circuit de fréquence F1 génère une tension V lorsqu'activé, et le circuit de fréquence F2 une tension V' supérieure, de même polarité. Un troisième circuit de fréquence F3 permet d'appliquer une tension de polarité opposée, qui permet de réinitialiser le matériau électro-optique. L'utilisateur peut appliquer une tension V ou V' en sélectionnant la fréquence d'activation, et donc la couleur résultante. Pour changer de couleur, l'utilisateur peut appliquer la tension V' en activant avec la fréquence F2 si la tension précédemment appliquée était V, ou appliquer une tension de polarité inverse en activant avec la fréquence F3 puis la tension V en activant avec la fréquence F1. Pour générer des tensions différentes en fonction de la fréquence, on peut jouer par exemple sur le facteur de qualité du circuit de réception.

Dans une autre variante, le circuit électronique 30 comporte l'intelligence embarquée nécessaire au traitement de signaux de commande codant une instruction pour la lentille, par exemple le changement de la polarité du champ appliqué et/ou son amplitude.

Pour réaliser l'encapsulation de la structure électro-optique et du circuit électronique, on peut procéder de toute manière adaptée.

Par exemple, pour réaliser le corps de la lentille, on utilise un jeu de deux éléments d'encapsulation assemblés entre eux, dont la matière première est usuellement mise en œuvre pour la fabrication de lentilles de contact rigides. Il peut par exemple s'agir de matériaux présentant au moins une base en polymère.

Ce jeu d'éléments d'encapsulation comprend par exemple un élément d'encapsulation inférieur en creux, dont le profil est défini selon la nature et le design du(des)composant(s) à encapsuler, et un élément d'encapsulation supérieur mâle dont le profil est adapté à celui de l'élément en creux et du(des)composant(s) à encapsuler. L'encapsulation est réalisée par exemple via un procédé de polymérisation d'un matériau dit de liaison. On peut éventuellement former lors de l'encapsulation un dioptre dans la zone centrale 11 de la lentille.

Après leur usinage, les éléments d'encapsulation peuvent subir une étape supplémentaire afin de les préparer à subir des contraintes spécifiques liées au procédé d'assemblage et/ou à la nature du ou des composants encapsulés. Cela nécessite par exemple des volumes non uniformes avec des ergots de positionnement et/ou d'alignement, éventuellement des drains/rainures périphériques pour évacuer l'air et/ou l'excédent de matériau polymère de liaison durant une phase de compression des deux éléments.

Pour obtenir l'assemblage des deux éléments avec l'encapsulation souhaitée du circuit électronique et de la structure électro-optique, on peut appliquer une force de compression entre eux. L'élément inférieur en creux peut être placé dans un insert inférieur d'un dispositif de compression, et l'élément supérieur mâle dans un insert supérieur. Quelques gouttes de polymère de liaison peuvent être déposées sur la périphérie de l'élément en creux. Ce polymère est par exemple à base acrylate. Le bâti du dispositif applique alors une force de compression pour permettre la liaison pendant une durée déterminée en fonction des matériaux utilisés pour les éléments et pour le matériau de liaison.

Bien entendu, l'invention n'est pas limitée aux exemples décrits.

Le circuit électronique de la lentille peut être plus complexe et celle-ci peut comprendre par exemple un ou plusieurs circuits de commande reconfigurables, de type SWIPT (acronyme anglais pour « *Simultaneous Wireless Information and Power Transfer* », soit en français « transfert sans fil simultané d'informations et d'énergie »), par exemple par consigne externe reçue par l'antenne RF de la lentille de contact.

La lentille de contact peut comprendre des moyens de récupération et de conversion d'énergie mécanique, lumineuse ou chimique provenant des larmes de l'œil, pour alimenter électriquement le circuit électronique.

La lentille peut être réalisée différemment que par le procédé qui vient d'être décrit. Par exemple, l'encapsulation des différents éléments au sein de la lentille de contact peut se faire par toute méthode adaptée, notamment par moulage.

## Revendications

1. Lentille de contact (1), notamment de type scléral, à changement de teinte commandable par l'utilisateur, comportant :
- une structure électro-optique (20) comportant au moins une couche (21) d'un matériau électro-optique absorbant bistable, pouvant passer sous l'effet de l'application d'un champ électrique d'au moins un premier état stable à au moins un deuxième état stable ayant des propriétés d'absorption colorimétriques différentes, et de préférence réciproquement sous l'effet de l'application d'un champ électrique de polarité opposée, ce changement d'état dudit matériau entrainant la modification de la couleur apparente de la lentille de contact, le matériau électro-optique s'étendant dans une région annulaire destinée à recouvrir au moins partiellement l'iris tout en laissant dégagée une zone centrale (11),
- un circuit électronique (30) encapsulé dans la lentille (1), configuré pour soumettre ledit matériau à un champ électrique provoquant son changement d'état, en réponse à la réception d'un signal de commande correspondant,
la couche de matériau électro-optique (21) étant non opaque et la structure électro-optique (20) comportant au moins une couche réfléchissante ou semi-réfléchissante (24) à réflexion diffuse, placée derrière la couche de matériau électro-optique (21), et masquant au moins partiellement, et de préférence totalement, le circuit électronique (30) situé en dessous.

2. Lentille selon l'une quelconque des revendications précédentes, la structure électro-optique (20) comportant au moins deux électrodes (22, 23) disposées de part et d'autre de la couche de matériau électro-optique (21), notamment deux électrodes transparentes disposés respectivement au-dessus et en-dessous de la couche de matériau électro-optique (21).

3. Lentille selon l'une quelconque des revendications précédentes, la structure électro-optique (20) comportant au moins une première couche (21) d'un premier matériau électro-optique bistable et une deuxième couche (25) d'un deuxième matériau électro-optique bistable différent du premier.

4. Lentille selon l'une quelconque des revendications précédentes, au moins une couche de matériau électro-optique absorbant (21 ; 25) comportant un mélange d'au moins deux composés changeant de couleur sous l'effet de l'application d'une tension, de préférence un mélange d'au moins deux composés électro-chromes différents, notamment prenant des couleurs différentes lorsque soumis à un champ électrique.

5. Lentille selon la revendication précédente, les au moins deux composés ayant des seuils de tension et/ou des cinétiques de transformation différents, de telle sorte que l'on peut contrôler la couleur résultante en choisissant l'amplitude de la tension appliquée et/ou la durée d'application de la tension.

6. Lentille selon l'une quelconque des revendications précédentes, les propriétés colorimétriques de la couche réfléchissante ou semi-réfléchissante (24) étant choisies par rapport à celles d'au moins une couche de matériau électro-optique (21) de telle sorte que la lentille de contact puisse prendre au moins deux couleurs apparentes distinctes.

7. Lentille selon l'une quelconque des revendications précédentes, le circuit électronique (30) étant agencé pour recevoir un signal de commande RF ou optique notamment IR, de préférence un signal de commande RF.

8. Lentille selon l'une quelconque des revendications précédentes, le circuit électronique (30) comportant au moins une antenne (61,71) ou un autre type de capteur, par exemple optique, permettant de recevoir l'énergie nécessaire à son fonctionnement, de préférence au moins une antenne comportant une ou plusieurs spires s'étendant autour de ladite zone centrale (11).

9. Lentille selon l'une quelconque des revendications précédentes, le circuit électronique (30) étant agencé de telle sorte que l'énergie nécessaire au fonctionnement du circuit électronique (30) soit apportée par le signal de commande.

10. Lentille selon l'une quelconque des revendications précédentes, le circuit électronique (30) comportant deux circuits de réception (60, 70) accordés sur des fréquences respectives différentes (F1, F2) et/ou sensibles à des polarisations respectives différentes du signal de commande, de préférence deux circuits de réception accordés à des fréquences respectives différentes, ces circuits de réception permettant d'appliquer des champs électriques respectifs de polarités opposées et/ou d'amplitudes différentes à au moins une couche de matériau électro-optique (21), la lentille étant alors de préférence dépourvue d'accumulateur électrique, de préférence chaque circuit de réception (60,70) comportant une antenne propre (61,71), de préférence une antenne comportant au moins une spire, et un redresseur respectif (D1, D2) par lequel le circuit de réception (60, 70) est relié à la structure électro-optique (20).

11. Lentille selon l'une quelconque des revendications 1 à 9, le circuit électronique (30) étant agencé pour générer de façon séquentielle, à chaque fois qu'il reçoit le signal de commande, une tension d'alimentation de la structure électro-optique (20) dont la polarité est opposée à celle précédemment générée, la lentille comportant de préférence un micro-accumulateur électrique (B1) pour permettre la mémorisation de la polarité d'alimentation de la structure électro-optique (20) en l'absence de réception du signal de commande.

12. Lentille selon l'une quelconque des revendications précédentes, le ou les matériau(x) électro-optique (21, 25) étant de type électro-chromique bistable, électrophorétique, électro-plasmonique ou cristal liquide bistable, notamment cristal liquide avec des dopants dichroïques colorés, le ou les matériau(x) électro-optique(s) étant de préférence de type électro-chromique bistable.

13. Ensemble comportant d'une part une lentille selon l'une quelconque des revendications précédentes et d'autre part un dispositif d'activation (100 ; 101) permettant de générer le signal de commande de changement d'état, notamment un dispositif d'activation comportant un émetteur bi-fréquence accordé sur les deux fréquences des antennes (F1, F2) du circuit électronique de la revendication 10.

14. Procédé consistant à provoquer le changement de couleur d'une lentille de contact telle que définie dans l'une quelconque des revendications 1 à 12, ou appartenant à un ensemble tel que défini à la revendication 13, comportant l'étape consistant à :
- émettre un signal de commande à l'aide d'un dispositif d'activation (100 ; 101), la réception de ce signal de commande par le circuit électronique (30) de la lentille provoquant l'application au matériau électro-optique (21) d'un champ électrique d'une polarité, d'une amplitude et/ou d'une durée prédéfinie(s), conduisant le matériau optique à changer d'état, le matériau conservant cet état lorsque le champ électrique cesse d'être appliqué.

## Patentansprüche

1. Kontaktlinse (1), insbesondere vom skleralen Typ, mit vom Benutzer steuerbarer Farbtonänderung, umfassend:
- eine elektrooptische Struktur (20), die mindestens eine Schicht (21) eines bistabilen absorbierenden elektrooptischen Materials umfasst, das unter der Wirkung des Anlegens eines elektrischen Feldes von mindestens einem ersten stabilen Zustand zu mindestens einem zweiten stabilen Zustand übergehen kann, die unterschiedliche kolorimetrische Absorptionseigenschaften besitzen, und bevorzugt wechselseitig unter der Wirkung des Anlegens eines elektrischen Feldes mit entgegengesetzter Polarität, wobei diese Zustandsänderung des Materials zur Veränderung der sichtbaren Farbe der Kontaktlinse führt, wobei sich das elektrooptische Material in einer ringförmigen Region erstreckt, die dazu bestimmt ist, mindestens teilweise die Iris zu bedecken, während sie einen zentralen Bereich (11) frei lässt,
- eine elektronische Schaltung (30), die in die Linse (1) gekapselt ist und dazu ausgelegt ist, das Material als Reaktion auf das Empfangen eines entsprechenden Steuerungssignals einem elektrischen Feld zu unterziehen, das seine Farbänderung bewirkt,
wobei die Schicht aus elektrooptischem Material (21) nicht opak ist und wobei die elektrooptische Struktur (20) mindestens eine reflektierende oder halbreflektierende Schicht (24) mit diffuser Reflexion umfasst, die hinter der Schicht aus elektrooptischem Material (21) positioniert ist und die darunter liegende elektronische Schaltung (30) mindestens teilweise und bevorzugt vollständig verdeckt.

2. Linse nach einem der vorhergehenden Ansprüche, wobei die elektrooptische Struktur (20) mindestens zwei Elektroden (22, 23) umfasst, die beidseits der Schicht aus elektrooptischem Material (21) angeordnet sind, insbesondere zwei transparente Elektroden, die über beziehungsweise unter der Schicht aus elektrooptischem Material (21) angeordnet sind.

3. Linse nach einem der vorhergehenden Ansprüche, wobei die elektrooptische Struktur (20) mindestens eine erste Schicht (21) aus einem ersten bistabilen elektrooptischen Material und eine zweite Schicht (25) aus einem zweiten bistabilen elektrooptischen Material, das von dem ersten verschieden ist, umfasst.

4. Linse nach einem der vorhergehenden Ansprüche, wobei mindestens eine Schicht aus absorbierendem elektrooptischem Material (21; 25) ein Gemisch aus mindestens zwei Verbindungen umfasst, das unter der Wirkung des Anlegens einer Spannung die Farbe ändert, bevorzugt ein Gemisch aus mindestens zwei verschiedenen elektrochromen Verbindungen, das insbesondere verschiedene Farben annimmt, wenn es einem elektrischen Feld ausgesetzt wird.

5. Linse nach dem vorhergehenden Anspruch, wobei die mindestens zwei Verbindungen verschiedene Spannungsschwellenwerte und/oder Umwandlungskinetiken besitzen, so dass die resultierende Farbe gesteuert werden kann, indem die Amplitude der angelegten Spannung und/oder die Anlegedauer der Spannung gewählt wird.

6. Linse nach einem der vorhergehenden Ansprüche, wobei die kolorimetrischen Eigenschaften der reflektierenden oder halbreflektierenden Schicht (24) im Verhältnis zu denjenigen mindestens einer Schicht aus elektrooptischem Material (21) gewählt werden, so dass die Kontaktlinse mindestens zwei unterschiedliche sichtbare Farben annehmen kann.

7. Linse nach einem der vorhergehenden Ansprüche, wobei die elektronische Schaltung (30) dazu ausgebildet ist, ein RF- oder optisches, insbesondere IR-, Steuersignal, bevorzugt ein RF-Steuersignal, zu empfangen.

8. Linse nach einem der vorhergehenden Ansprüche, wobei die elektronische Schaltung (30) mindestens eine Antenne (61,71) oder einen anderen Sensortyp, zum Beispiel einen optischen, umfasst, die bzw. der es ermöglicht, die für ihren Betrieb erforderliche Energie zu empfangen, bevorzugt mindestens eine Antenne, die eine oder mehrere Windungen umfasst, die sich um den zentralen Bereich (11) herum erstrecken.

9. Linse nach einem der vorhergehenden Ansprüche, wobei die elektronische Schaltung (30) so ausgebildet ist, dass die für den Betrieb der elektronischen Schaltung (30) erforderliche Energie durch das Steuersignal zugeführt wird.

10. Linse nach einem der vorhergehenden Ansprüche, wobei die elektronische Schaltung (30) zwei Empfangsschaltungen (60, 70) umfasst, die auf verschiedene jeweilige Frequenzen (F1, F2) abgestimmt sind und/oder für verschiedene jeweilige Polarisationen des Steuersignals empfindlich sind, bevorzugt zwei Empfangsschaltungen, die auf verschiedene jeweilige Frequenzen abgestimmt sind, wobei diese Empfangsschaltungen es ermöglichen, jeweilige elektrische Felder mit entgegengesetzten Polaritäten und/oder mit verschiedenen Amplituden an mindestens eine Schicht aus elektrooptischem Material (21) anzulegen, wobei die Linse dann bevorzugt keinen elektrischen Akkumulator aufweist, wobei bevorzugt jede Empfangsschaltung (60,70) eine eigene Antenne (61,71) umfasst, bevorzugt eine Antenne, die mindestens eine Windung umfasst, und einen jeweiligen Gleichrichter (D1, D2), über den die Empfangsschaltung (60, 70) mit der elektrooptischen Struktur (20) verbunden ist.

11. Linse nach einem der Ansprüche 1 bis 9, wobei die elektronische Schaltung (30) dazu ausgebildet ist, sequenziell, jedes Mal, wenn sie das Steuersignal empfängt, eine Versorgungsspannung für die elektrooptische Struktur (20) zu erzeugen, deren Polarität entgegengesetzt zu der zuvor erzeugten ist, wobei die Linse bevorzugt einen elektrischen Mikro-Akkumulator (B1) umfasst, um das Speichern der Versorgungspolarität der elektrooptischen Struktur (20) bei Nichtempfang des Steuersignals zu ermöglichen.

12. Linse nach einem der vorhergehenden Ansprüche, wobei das oder die elektrooptische(n) Material(ien) (21, 25) vom bistabilen elektrochromen Typ, vom elektrophoretischen Typ, vom elektroplasmonischen Typ oder vom bistabilen Flüssigkristalltyp, insbesondere vom Flüssigkristalltyp mit gefärbten dichroitischen Dotierungsstoffen, ist(sind), wobei das oder die elektrooptische(n) Material(ien) bevorzugt vom bistabilen elektrochromen Typ ist(sind).

13. Anordnung, umfassend zum einen eine Linse nach einem der vorhergehenden Ansprüche und zum anderen eine Aktivierungsvorrichtung (100; 101), die es ermöglicht, das Zustandsänderungssteuersignal zu erzeugen, insbesondere eine Aktivierungsvorrichtung, die einen Zweifrequenzsender umfasst, der auf die beiden Frequenzen der Antennen (F1, F2) der elektronischen Schaltung des Anspruchs 10 abgestimmt ist.

14. Verfahren, das darin besteht, die Farbänderung einer wie in einem der Ansprüche 1 bis 12 definierten oder zu einer Anordnung wie in Anspruch 13 definiert gehörenden Kontaktlinse zu bewirken, umfassend den Schritt, der darin besteht:
- ein Steuersignal mithilfe einer Aktivierungsvorrichtung (100; 101) zu senden, wobei das Empfangen dieses Steuersignals durch die elektronische Schaltung (30) der Linse das Anlegen eines elektrischen Feldes mit einer vorgegebenen Polarität, Amplitude und/oder Dauer an das elektrooptische Material (21) bewirkt, was das optische Material veranlasst, den Zustand zu ändern, wobei das Material diesen Zustand beibehält, wenn das elektrische Feld nicht mehr angelegt wird.

## Claims

1. Contact lens (1), notably of scleral type, with user-controllable change of colour hue, comprising:
- an electro-optical structure (20) comprising at least one layer (21) of a bistable absorbent electro-optical material, that can switch under the effect of the application of an electrical field from at least one first stable state to at least one second stable state having different colorimetric absorption properties, and preferably vice versa under the effect of the application of an electrical field of opposite polarity, this change of state of said material leading to the modification of the visible colour of the contact lens, the electro-optical material extending in an annular region intended to at least partially cover the iris while leaving a central zone (11) free,
- an electronic circuit (30) encapsulated in the lens (1), configured to subject said material to an electrical field provoking the change of state thereof, in response to the reception of a corresponding control signal,
the layer of electro-optical material (21) being non-opaque and the electro-optical structure (20) comprising at least one reflecting or semi-reflecting layer (24) with diffuse reflection, placed behind the layer of electro-optical material (21), and at least partially, and preferably totally, masking the electronic circuit (30) situated below.

2. Lens according to any one of the preceding claims, the electro-optical structure (20) comprising at least two electrodes (22, 23) disposed on either side of the layer of electro-optical material (21), notably two transparent electrodes disposed respectively above and below the layer of electro-optical material (21).

3. Lens according to either one of the preceding claims, the electro-optical structure (20) comprising at least one first layer (21) of a first bistable electro-optical material and a second layer (25) of a second bistable electro-optical material that is different from the first.

4. Lens according to any one of the preceding claims, at least one layer of absorbent electro-optical material (21; 25) comprising a mixture of at least two compounds that change colour under the effect of the application of a voltage, preferably a mixture of at least two different electrochromic compounds, notably taking different colours when subjected to an electrical field.

5. Lens according to the preceding claim, the at least two compounds having different voltage thresholds and/or transformation kinetics, such that it is possible to control the resulting colour by choosing the amplitude of the voltage applied and/or the duration of application of the voltage.

6. Lens according to any one of the preceding claims, the colorimetric properties of the reflecting or semi-reflecting layer (24) being chosen with respect to those of at least one layer of electro-optical material (21) such that the contact lens can take at least two distinct visible colours.

7. Lens according to any one of the preceding claims, the electronic circuit (30) being arranged to receive an RF or optical, notably IR, control signal, preferably an RF control signal.

8. Lens according to any one of the preceding claims, the electronic circuit (30) comprising at least one antenna (61, 71) or another type of sensor, for example optical, that makes it possible to receive the energy necessary to its operation, preferably at least one antenna comprising one or more turns extending around said central zone (11).

9. Lens according to any one of the preceding claims, the electronic circuit (30) being arranged such that the energy necessary to the operation of the electronic circuit (30) is provided by the control signal.

10. Lens according to any one of the preceding claims, the electronic circuit (30) comprising two reception circuits (60, 70) tuned to different respective frequencies (F1, F2) and/or sensitive to different respective polarizations of the control signal, preferably two reception circuits tuned to different respective frequencies, these reception circuits making it possible to apply respective electrical fields of opposite polarities and/or of different amplitudes to at least one layer of electro-optical material (21), the lens then preferably not having any electrical battery, preferably each reception circuit (60, 70) comprising a specific antenna (61, 71), preferably an antenna comprising at least one turn, and a respective rectifier (D1, D2) by which the reception circuit (60, 70) is linked to the electro-optical structure (20).

11. Lens according to any one of Claims 1 to 9, the electronic circuit (30) being arranged to generate sequentially, each time it receives the control signal, a power supply voltage of the electro-optical structure (20) of which the polarity is opposite to that previously generated, the lens preferably comprising an electric micro-battery (B1) to allow the storage of the power supply polarity of the electro-optical structure (20) in the absence of reception of the control signal.

12. Lens according to any one of the preceding claims, the electro-optical material or materials (21, 25) being of bistable electrochromic, electrophoretic, electroplasmonic or bistable liquid crystal type, notably liquid crystal with coloured dichroic dopants, the electro-optical material or materials being preferably of bistable electrochromic type.

13. Assembly comprising, on the one hand, a lens according to any one of the preceding claims and, on the other hand, an activation device (100; 101) making it possible to generate the state-changing control signal, notably an activation device comprising a bifrequency emitter tuned to the two frequencies of the antennas (F1, F2) of the electronic circuit of Claim 10.

14. Method consisting in provoking the change of colour of a contact lens as defined in any one of Claims 1 to 12, or belonging to an assembly as defined in Claim 13, comprising the step consisting in:
- emitting a control signal using an activation device (100; 101), the reception of this control signal by the electronic circuit (30) of the lens provoking the application to the electro-optical material (21) of an electrical field of a polarity, of an amplitude and/or of a duration that are predefined, causing the optical material to change state, the material maintaining this state when the electrical field ceases to be applied.
